# EUROPEAN PATENT APPLICATION

(11) **EP 4 648 231 A1**
(43) Date of publication of application: **12.11.2025**
(21) Application number: 23915673.0
(22) Date of filing: 31.10.2023
(51) Int. Cl.: H01R 13/502

(54) **ELECTRIC-SHOCK PREVENTION REPAIR STRUCTURE AND BATTERY PACK**

(30) Priority: 09.01.2023 CN 202320075184 U; 09.01.2023 CN 202310027277
(71) Applicant: Eve Energy Co., Ltd., Huizhou, Guangdong 516006 (CN)
(72) Inventor: HUANG, Weicai, Huizhou, Guangdong 516006 (CN)
(74) Representative: Berggren Oy
(86) International application number: PCT/CN2023/128318
(87) International publication number: WO 2024/148915

(57) **Abstract**

This invention provides an electric shock-free maintenance structure and a battery pack, including: a structure body provided with a low-voltage control circuit, a main circuit, and a relay; a maintenance cover installed on the structure body; and a switch connected in series with the low-voltage control circuit. The switch includes a plug and a socket, the plug and the socket are respectively equipped on the structure body and on the maintenance cover. When the plug and the socket are electrically and mechanically connected, the low-voltage control circuit is powered on, and the relay is closed and energized to activate the main circuit. When the plug and socket are electrically or mechanically disconnected, the low-voltage control circuit is cut off, and the relay is open and de-energized to cut off the main circuit.

## Description

This application claims priority to Chinese patent application NO. 202310027277.2 filed on January 9, 2023, and Chinese patent application NO. 202320075184.2 filed on January 9, 2023. The entire contents of the above applications are incorporated into this application by reference.

### Technical Field

The present invention relates to the technical field of battery packs, and in particular to an electric shock-free maintenance structure and a battery pack.

### Background

Currently a battery pack is usually fixed inside a car body and is provided with a maintenance port to facilitate maintenance. This enables maintenance personnel to find and repair damaged components through manual inspection directly from the maintenance port at the bottom of the car, instead of disassembling the battery pack from the car.

When the battery pack of the car is repaired, the battery pack needs to be electrically disconnected from the car to ensure the safety of the maintenance personnel and avoid electric shock. However, in actual operations, when the maintenance personnel unplug a manual service disconnect (MSD) plug, there is usually no indication confirming that the battery pack is completely powered off, which means that the battery pack may not be powered off or not completely powered off. If there is still a current within the battery pack, the maintenance personnel may be at risk of electric shock when their hands come into contact with live parts, such as copper bars inside the battery pack. This could lead to irreparable damage.

### Summary

### Technical Problems

In order to overcome at least one of the shortcomings described in the prior art, the present invention provides an electric shock-free maintenance structure and a battery pack, which can avoid the electric shock risk for the maintenance personnel. Before the MSD plug is unplugged, a low-voltage control circuit is cut off as a maintenance cover is removed, thereby controlling a relay to be opened and de-energized and hence causing a main circuit of the battery pack to be cut off. Therefore, when the MSD plug is unplugged, live parts such as copper bars inside the battery pack are in a de-energized state, avoiding the electric shock problem.

### Technical Solutions

According to a first aspect, the present invention provides an electric shock-free maintenance structure and a battery pack, including: a structure body provided with a low-voltage control circuit, a main circuit, and a relay; a maintenance cover installed on the structure body; and a switch connected in series with the low-voltage control circuit. The switch includes a plug and a socket, the plug and the socket are respectively equipped on the structure body and on the maintenance cover. When the plug and the socket are electrically and mechanically connected, the low-voltage control circuit is powered on, and the relay is closed and energized to activate the main circuit. When the plug and socket are electrically or mechanically disconnected, the low-voltage control circuit is cut off, and the relay is open and de-energized to cut off the main circuit.

Through the above solution, the internal main circuit may be cut off when the structure body and the maintenance cover are separated, thereby effectively avoiding the electric shock during maintenance.

According to a second aspect, the present invention provides a battery pack applying the electric shock-free maintenance structure.

Through the above solution, the safety of the battery pack during maintenance is enhanced, avoiding the maintenance personnel from the electric shock.

### Beneficial Effects

1. By assembling the socket and the plug of the conducting switch 3 on the maintenance cover 2 and the structure body respectively, when the maintenance cover 2 is opened, the socket and the plug are separated to achieve a mechanical level power-off protection effect.
2. By connecting the low-voltage control circuit 11 in series with the switch 3, and controlling an on/off state of the main circuit 12 through the relay 13, an electrical level power-off protection effect is achieved.
3. Through the dual protection effects on mechanical and electrical levels, the safety of maintenance personnel is improved and the electric shock problem during maintenance is avoided.
4. An overall power-off is automatically started with the disassembly of maintenance cover 2, without manual shutdown of power, saving operation steps and optimizing a maintenance progress.

### Brief Description of the Drawings

FIG. 1 is a schematic diagram of an electric shock-free maintenance structure according to some embodiments of the present invention.
FIG. 2 is a schematic local exploded view of a switch according to some embodiments of the present invention.
FIG. 3 is a schematic exploded view of the switch according to some embodiments of the present invention.
FIG. 4 is a schematic longitudinal sectional view of the structure of the switch according to some embodiments of the present invention.
FIG. 5 is a schematic diagram of a battery pack structure according to some embodiments of the present invention.
FIG. 6 is a schematic diagram of a circuit of the electric shock-free maintenance structure according to some embodiments of the present invention.
FIG. 7 is a schematic diagram of the electric shock-free maintenance structure inside a battery pack according to some embodiments of the present invention.

Meanings of reference signs are as follows: 1, structure body; 11, low-voltage control circuit; 111, battery management system (BMS); 12, main circuit; 121, battery module; 122, manual service disconnect (MSD) plug; 13, relay; 2, maintenance cover; 3, switch; 31, insulating socket bracket; 311, first plug-in portion; 312, first assembly portion; 313, wiring portion; 314, accommodation cavity; 32, metal terminal; 321, plug slot; 33, wire; 34, insulating plug bracket; 341, second plug-in portion; 342, second assembly portion; 343, needle cavity; 344, plug cavity; 35, conductive pin; 4, assembly hole; 5, fixing member; 6, battery pack; 61, frame; and 62, buffer pad.

### Detailed Description of the Embodiments

In the description of the present invention, it should be noted that direction or position relationships, which are indicated by the terms "up", "down", "front", "back", "left", "right", "vertical", "horizontal", "top", "bottom", "inside", "outside", etc., are based on direction or position relationships shown in the accompanying drawings, and are only for the convenience of describing the present invention and simplifying the description, rather than indicating or implying that a device or element referred to must have a specific orientation or must be constructed and operated in a specific orientation, and therefore cannot be understood as a limitation of the present invention.

Unless otherwise defined, all technical and scientific terms used herein are the same as commonly understood by those skilled in the technical field of the present invention. The terms used in the specification of the present invention are for the purpose of describing specific embodiments only and are not intended to limit the present invention.

In some embodiments, in a main circuit, a battery module, an MSD plug, and a relay are connected in series; and in a low-voltage control circuit, a BMS, a switch, and the relay are connected in series. Two pins connected to normally open contacts in the relay are connected in series with the main circuit, and two other pins of the relay are connected in series with the low-voltage control circuit.

By adopting the above-mentioned solution, the switch is used to control an on/off state of the low-voltage control circuit, thereby putting the contacts of the relay in the open/closed position and thus controlling an on/off state of the main circuit. This can realize an automatic power-off effect of the main circuit before maintenance.

Further, in some embodiments, a socket includes: an insulating socket bracket with two accommodation cavities; two metal terminals respectively installed in the two accommodation cavities of the insulating socket bracket; two wires, wherein each wire extends through the insulating socket bracket into a corresponding one of the accommodation cavities and is connected to a corresponding one of the metal terminals. One end of each metal terminal is flush with a surface of the insulating socket bracket, and the other end of the metal terminal is connected to a corresponding one the wires that extends through the insulating socket bracket into the accommodation cavity in which the metal terminal is mounted.

By adopting the above-described solution, the two separated metal terminals in the socket can keep the low-voltage control circuit in an off state.

Further, in some embodiments, the two metal terminals are respectively provided with two plug slots configured to receive the plug, and each plug slot is provided at the one end of a corresponding one of the metal terminals.

By adopting the above-mentioned solution, a connection stability between the two metal terminals after being connected by the inserted plug is improved.

Further, in some embodiments, the insulating socket bracket includes: a first plug-in portion, located at one end of the insulating socket bracket and configured to receive the plug; a first assembly portion, located at the other end of the insulating socket bracket, and extending in two opposite directions toward and beyond two sides of the first plug-in portion; a wiring portion, located at one side of the first plug-in portion and configured for the wires to be threaded through.

By adopting the above solution, the installation stability of the insulating socket bracket is improved.

Further, the plug includes: an insulating plug bracket with a needle cavity; and a conductive needle mounted in the needle cavity and configured to be connected to the socket to achieve conduction of the socket.

By adopting the above-mentioned solution, the plug structure can realize an electrical connection inside the socket.

Further, in some embodiments, the insulating plug bracket includes: a second plug-in portion, wherein the second plug-in portion is located at one end of the insulating plug bracket and is recessed inward into the insulating plug bracket to form a plug-in cavity, and the plug-in cavity is configured to receive the first plug-in portion; and a second assembly portion, located at the other end of the insulating plug bracket and extending in two opposite directions towards and beyond two side of the second plug-in portion.

By adopting the above-mentioned solution, the insulating plug bracket can improve its own installation stability and improve its plug-in connection stability with the socket.

Further, in some embodiments, two ends of the conductive needle extend through the needle cavity into the plug-in cavity and are respectively plugged into the two plug-in slots, and are configured to connect the two metal terminals of the socket.

By adopting the above-mentioned solution, the metal terminals can be connected through the conductive needle, realizing the electrical connection inside the socket, thereby further completing the low-voltage control circuit. As a result, the relay is powered on and contacts of the relay are put in the closed position and the relay is energized, thereby completing the main circuit 12.

Further, in some embodiments, the first assembly portion and the second assembly portion are provided with assembly holes, and fixing members are inserted through the assembly holes.

By adopting the above-mentioned solution, the socket and the plug are fixedly assembled through the fixing members to improve assembly stability.

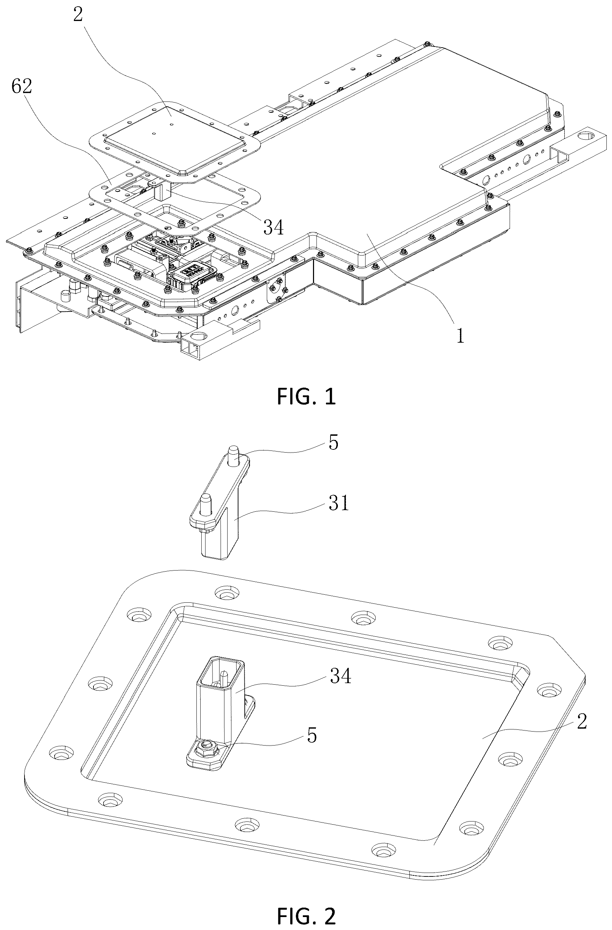

Embodiment 1 of the present invention is shown in FIGS. 1-4, and the present invention discloses an electric shock-free maintenance structure, including a structure body 1, a switch 3, and a maintenance cover 2. The structure body 1 is a live (energized) main structure to be maintained, and the maintenance cover 2 is a cover fitted on the structure body 1. An area of the maintenance cover 2 is usually smaller than an area of a surface of the structure body 1 where the cover 2 is located. The maintenance cover 2 and the structure body 1 are connected in a detachable manner, including but not limited to screw connection, mechanical clamping, or snap fit.

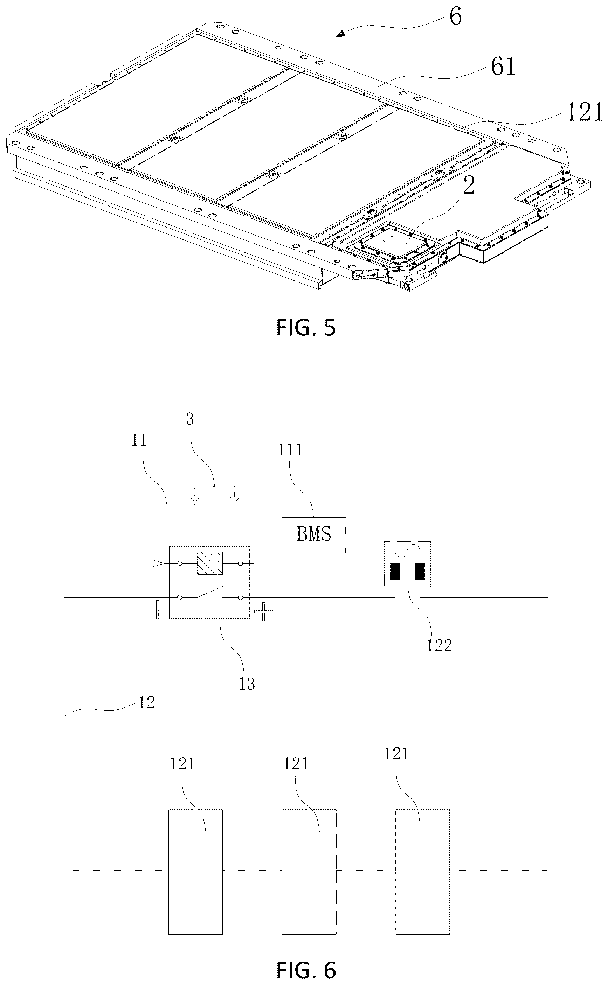

Referring to FIG. 6, the structure body 1 is provided with a low-voltage control circuit 11, a main circuit 12, and a relay 13. In this first embodiment, in the main circuit 12, battery modules 121, an MSD plug 122, and a relay 13 are connected in series; and in the low-voltage control circuit 11, the BMS 111, a switch 3, and the relay 13 are connected in series. Two pins connected to normally open contacts in the relay 13 are connected in series with the main circuit 12, and two other pins of the relay 13 are connected in series with the low-voltage control circuit 11. The switch 3 is used to control an on/off state of the low-voltage control circuit 11, thereby putting the contacts of the relay 13 in the open/closed position, and thus controlling an on/off of the main circuit 12. This can create an automatic power off effect at an electrical level of the main circuit 12 before the maintenance.

The switch 3 is connected in series in the low-voltage control circuit 11. The switch 3 includes a plug and a socket. The plug and socket are respectively equipped on the structure body 1 and the maintenance cover 2. The positions of the plug and the socket are interchangeable on the structure body 1 and the maintenance cover 2. It is possible to realize breaking (cutting off) the low-voltage control circuit 11 via separating the plug and socket when the structure body 1 and the maintenance cover 2 are disassembled and separated. Hence, the relay 13 cannot be closed and powered on, and the main circuit is 12 is cut off. Specifically, when the plug is plugged in the socket, the low-voltage control circuit 11 is powered on, and the relay 13 is closed and powered on, so that the main circuit 12 is powered on. When the plug is disconnected from socket, the low-voltage control circuit 11 is cut off, and the relay 13 is opened to cut off the main circuit 12, which can realize a mechanical disconnection effect of the internal main circuit 12 when the structure body 1 is separated from the maintenance cover 2, thereby effectively avoiding the hazard of electric shock during maintenance.

By implementing dual electric shock-free maintenance protection through both the electrical level disconnection and the mechanical level disconnection, it is possible to prevent the maintenance personnel from working with electricity, thus ensuring the safety of personnel.

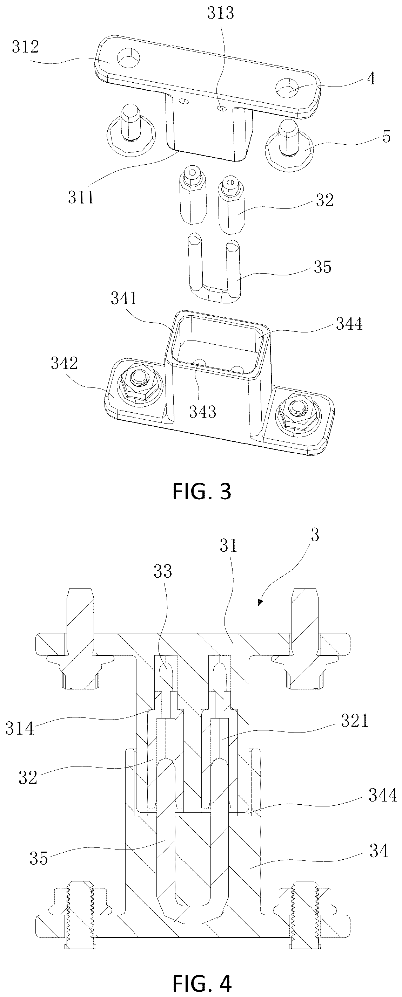

Referring to FIGS. 3 and 4, specifically, the socket includes an insulating socket bracket 31, two metal terminals 32, and two wires 33. The insulating socket bracket 31 includes a first plug-in portion 311, a first assembly portion 312, and a wiring portion 313. The first plug-in portion 311 is located at an end portion of one end of the insulating socket bracket 31 and is configured to receive the plug. The first plug-in portion 311 has two accommodation cavities 314 recessed inward and separated from each other. The accommodation cavities 314 are both cylindrical, in some other embodiments, the accommodation cavities 314 may be of other shapes. Each of the two accommodation cavities 314 is equipped with a corresponding one of the metal terminals 32. The metal terminal 32 is cylindrical. The accommodation cavity 314 is provided with a narrow portion inside the accommodation cavity 314, and a lower end of the metal terminal 3 is also provided with a narrow portion. One end of the metal terminal 32 where the narrow portion is provided is inserted into the accommodation cavity 314. The narrow portion at the lower end of the metal terminal 32 is inserted into the narrow portion of the accommodation cavity 314, until an upper end of the metal terminal 32 is flush with a surface of the insulating socket bracket 31. At this time, a wiring space is reserved in the narrow portion of the accommodation cavity 314. The wiring portion 313 is located at one side of the first plug-in portion 311. The wiring portion 313 is provided with two perforations each in communication with the wiring space in a corresponding accommodation cavity 314. Each wire 33 enters a corresponding one of the two perforations and communicate with the narrow portion at the lower end of a corresponding one of the two metal terminals 32, and is configured to connect the socket in series into the low-voltage control circuit 11. The two separated metal terminals 32 in the socket can keep the low-voltage control circuit 11 off.

The first assembly portion 312 is located at one end of the insulating socket bracket 31 away from the first plug-in portion 311, and the first assembly portion 312 extends in two opposite directions toward and beyond two sides of the first plug-in portion 311. Two side parts of the first assembly portion 312, which extend in two opposite directions beyond the two sides of the insulating socket bracket 31, are provided with assembly holes 4. The socket can be fixed on the structure body 1 or the maintenance cover 2 by inserting the fixing members 5 through the assembly holes 4. In this embodiment, the fixing members 5 are each a screw, and of course, the fixing members 5 may not be screws. In other embodiments, the fixing methods for the first assembly portion 312 may include, but are not limited to, riveting, welding, adhesive bonding, snap fitting, or integral connection.

An upper end of each metal terminal 32 is provided with a plug groove 321. The plug groove 321 is a cylindrical groove recessed inward, which improves the conduction stability after the metal terminal 32 receives the plug. In other embodiments, a shape of the plug grooves 321 may not be cylindrical, which is not specifically limited in this embodiment.

The plug includes an insulating plug bracket 34 and a conductive needle 35. The insulating plug bracket 34 includes a second plug-in portion 341 and a second assembly portion 342. The second plug-in portion 341 is located at an end portion of one end of the insulating plug bracket 34, and is recessed inward into the insulating plug bracket 34 to form a plug-in cavity 344. The plug-in cavity 344 has a same shape as the first plug-in portion 311, which allows a stable connection between the plug-in cavity 344 and the first plug-in portion 311. There is a needle cavity 343 in the insulating plug bracket 34. The needle cavity 343 is in a U shape, with two ends in communication with the plug-in cavity 344. The conductive needle 35 is assembled in the needle cavity 343. Therefore, the conductive needle 35 is also in a U shape, and two ends of the conductive needle 35 respectively extend from the two ends of the needle cavity 343 and into the plug-in cavity 344. The two ends of the conductive needle 35 are lower than an edge of the plug-in cavity 344. In some other embodiments, the needle cavity 343 and the conductive needle 35 may be of other shapes, which is not specifically limited in this embodiment.

The second assembly portion 342 is located at one end of the insulating plug bracket 34 away from the second plug-in portion 341, and extends in two opposite directions towards and beyond two sides of the second plug-in portion 341. Two side parts of the second assembly portion 342, which extend in two opposite directions beyond two sides of the second plug-in portion 341, are provided with assembly holes 4. By inserting a fixing member 5 through each assembly hole 4, the plug can be securely fixed to either the structure body 1 or the maintenance cover 2.In this embodiment, the fixing member 5 is a screw. Of course, the fixing member 5 is not limited to a screw. In other embodiments, the fixing methods for the first assembly component 312 may include, but are not limited to, riveting, welding, adhesive bonding, snap fitting, or integral connection.

It should be noted that the plug and the socket cannot be installed on the structure body 1 (or on the maintenance cover 2) at the same time. The plug and the socket must be installed respectively on the structure body 1 and the maintenance cover 2 for a plug-in connection. Regarding the specific positions of the plug and the socket, there are no restrictions, and their locations can be interchangeable.

When the plug is plugged into the socket, the first plug-in portion 311 is inserted into the plug-in cavity 344 of the second plug-in portion 341, the two ends of the conductive pin 35 are respectively inserted into the two metal terminals 32, making the two metal terminals 32 electrically connected, thereby conducting the low-voltage control circuit 11. As a result, the relay 13 is powered on, and the contacts of the relay 13 are in the closed position and conducted, thereby controlling the main circuit 12 to be powered on.

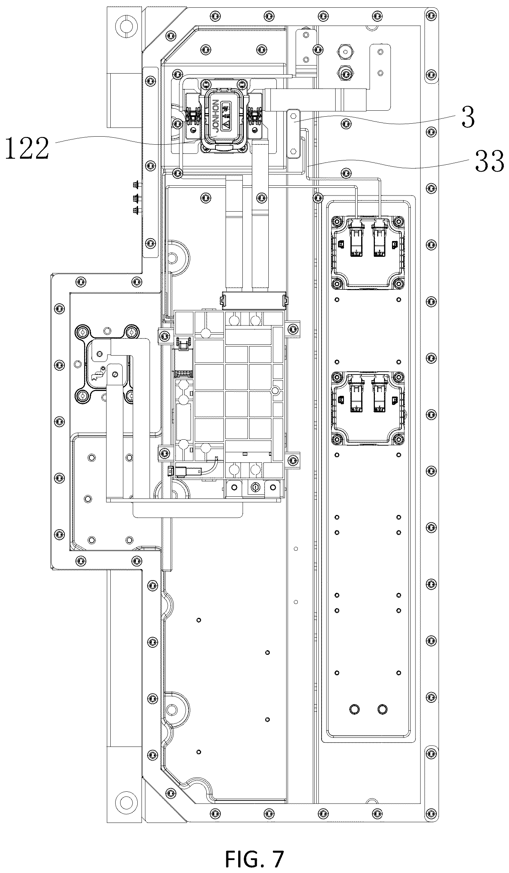

Referring to FIGS. 1, 5, 6, and 7, the present invention application further relates to a battery pack 6, including at least one battery module 121, frames 61, and the electric shock-free maintenance structure. The structure body 1 in the electric shock-free maintenance structure is a battery cover plate between the frames 61, and the maintenance cover 2 is mounted on the battery cover plate. A hollow buffer pad 62 is provided between the battery cover plate and the maintenance cover 2 at a peripheral of the maintenance cover 2, for isolating contact parts between the battery cover plate and the maintenance cover 2, so as to achieve a stable connection effect. Perforations arranged in a closed loop are provided in the buffer pad 62, and the fixing members 5 are inserted into the perforations to fixedly connect the battery cover plate and the maintenance cover 2.

In this embodiment, the socket of the switch 3 is installed on a crossbeam inside the battery cover plate, and the plug of the switch 3 is installed on the maintenance cover 2. When the maintenance cover 2 is connected to the battery cover plate, the socket and the plug are connected, the low-voltage control circuit 11 is completed, and the relay 13 is energized to make the main circuit 12 complete, thereby powering on the battery pack 6. When a maintenance personnel needs to maintain the battery pack 6, after removing the fixing members 5 connecting the battery cover plate and the maintenance cover 2, the maintenance cover 2 is disconnected from the battery cover plate, which separates the socket from the plug, the low-voltage control circuit 11 is cut off. As a result, the relay 13 is cut off, putting the contacts of the relay 13 in the open position, and thereby powering off the battery pack 6. After the power is cut off, when the maintenance personnel unplug the MSD plug 122 inside the battery pack 6, parts inside the battery pack 6 such as the copper bars that maintenance personnel touches by hand are all in a power-off state, thus achieving an electric shock-free maintenance and protection effect. In order to further improve the electric shock protection effect, the MSD plug 122 is made into a split manual maintenance switch MSD that can be quickly plugged and unplugged. After being unplugged, the MSD plug 122 ensures that the main circuit 12 of the battery pack 6 is completely powered off, which prevents the main circuit 12 from being energized due to circuit failure.

## Claims

1. An electric shock-free maintenance structure, comprising:
a structure body (1) provided with a low-voltage control circuit (11), a main circuit (12), and a relay (13);
a maintenance cover (2) installed on the structure body (1); and
a switch (3) connected in series with the low-voltage control circuit (11),
wherein the switch (3) comprises a plug and a socket, the plug and the socket are respectively equipped on the structure body (1) and on the maintenance cover (2),
when the plug and the socket are conducted, the low-voltage control circuit (11) is powered on, and the relay (13) is closed and energized to activate the main circuit (12), and
when the plug and socket are disconnected, the low-voltage control circuit (11) is cut off, and the relay (13) is open and de-energized to cut off the main circuit (12).

2. The electric shock-free maintenance structure according to claim 1, wherein:
in the main circuit (12), a battery module (121), an MSD plug (122), and the relay (13) are connected in series; and
in the low-voltage control circuit (11), a BMS (111), the switch (3), and the relay (13) are connected in series, wherein two pins (13) connected to normally open contacts in the relay are connected in series with the main circuit (12), and two other pins of the relay (13) are connected in series with the low-voltage control circuit (11).

3. The electric shock-free maintenance structure according to claim 1, wherein the socket comprises:
an insulating socket bracket (31) having two accommodation cavities (314);
two metal terminals (32), wherein each metal terminal (32) is mounted in a corresponding one of the two accommodating cavities (314) of the insulating socket bracket (31); and
two wires (33), wherein each wire (33) extends through the insulating socket bracket (31) into a corresponding one of the accommodation cavities and is connected to a corresponding one of the two metal terminals (32),
wherein one end of each metal terminal (32) is flush with a surface of the insulating socket bracket (31), and the other end of the metal terminal (32) is connected to the wire (33) that extends through the insulating socket bracket (31) into the accommodation cavity (314) in which the metal terminal is mounted.

4. The electric shock-free maintenance structure according to claim 3, wherein the two metal terminals (32) are respectively provided with two plug slots (321) configured to receive the plug, and each plug slot (321) is provided at the one end of a corresponding one of the metal terminals (32).

5. The electric shock-free maintenance structure according to claim 4, wherein the insulating socket bracket (31) comprises:
a first plug-in portion (311), wherein the first plug-in portion (311) is located at one end of the insulating socket bracket (31) and is configured to receive the plug;
a first assembly portion (312), wherein the first assembly portion (312) is located at the other end of the insulating socket bracket (31) and extends in two opposite directions towards and beyond two sides of the first plug-in portion (311); and
a wiring portion (313), wherein the wiring portion (313) is located at one side of the first plug-in portion (311) and is configured for the wires (33) to be threaded through.

6. The electric shock-free maintenance structure according to claim 5, wherein the plug comprises:
an insulating plug bracket (34) having a needle cavity (343); and
a conductive needle (35) mounted in the needle cavity (343) and is configured to be connected with the socket to conduct the socket.

7. The electric shock-free maintenance structure according to claim 6, wherein the insulating plug bracket (34) comprises:
a second plug-in portion (341), wherein the second plug-in portion (341) is located at one end of the insulating plug bracket (34), and is recessed inward into the insulating plug bracket (34) to form a plug cavity (344), and the plug cavity (344) is configured to receive the first plug-in portion (311); and
a second assembly portion (342), wherein the second assembly portion (342) is located at the other end of the insulating plug bracket (34) and extends in two opposite directions toward and beyond two sides of the second plug-in portion (341).

8. The electric shock-free maintenance structure according to claim 7, wherein two ends of the conductive needle (35) extend through the needle cavity (343) into the plug cavity (344) and are respectively plugged into the two plug slots (321), and are configured to connect the two metal terminals (32) of the socket.

9. The electric shock-free maintenance structure according to claim 7, wherein the first assembly portion (312) and the second assembly portion (342) are provided with assembly holes (4), and fixing members (5) are inserted into the assembly holes (4).

10. A battery pack applying the electric shock-free maintenance structure according to any one of claims 1-9.
